# EUROPÄISCHE PATENTANMELDUNG

(11) **EP 2 377 753 A1**
(43) Veröffentlichungstag der Anmeldung: **19.10.2011**
(21) Anmeldenummer: 10450058.2
(22) Anmeldetag: 13.04.2010
(51) Int. Cl.: B62L 3/02, B60T 7/08

(54) **Handbremse für zweirädrigen Fahrzeug**

(71) Anmelder: Kraemmer, Bernd, 1030 Wien (AT)
(72) Erfinder: Kraemmer, Bernd, 1030 Wien (AT)
(74) Vertreter: Wildhack, Andreas

(57) **Zusammenfassung**

Die Erfindung betrifft eine Handbremse umfassend einen Basisteil (2) und einen in einem Drehpunkt (3) auf dem Basisteil (2) verschwenkbar gelagerten Handgriff (1), von dem eine Betätigungseinheit (14) für eine hydraulische Bremsregeleinheit (4) getragen ist.

Erfindungsgemäß ist vorgesehen, dass am Handgriff (1) und am Basisteil (2), insbesondere im drehpunktnahen Bereich des Handgriffs (1) und des Basisteils (2), die miteinander zusammenwirkenden, signalgenerierenden Sensorteile (5, 6) einer Positionsgebereinheit (20) angeordnet sind, welche die Position und/oder die Verschwenkung des Handgriffs (1) gegenüber dem Basisteil (2) detektiert und an ihrem Ausgang ein von der gegenseitigen Stellung von Handgriff (1) und Basisteil (2) abhängiges Steuersignal abgibt.

## Beschreibung

Die Erfindung betrifft eine Handbremse gemäß dem Oberbegriff des Patentanspruches 1 sowie ein Fahrzeug gemäß dem Oberbegriff des Patentanspruches 13.

Derartige Handbremsen zur Bremsung der Vorder- oder Hinderräder eines Zweirades werden, insbesondere auch bei elektrisch angetriebenen zweirädrigen Fahrzeugen, am Lenker des Fahrzeuges angebracht.

Ziel der Erfindung ist es, die Funktionalität derartiger Handbremsen zu erhöhen und dabei den üblichen Bremsbetrieb eines zweirädrigen Fahrzeuges möglichst unverändert beizubehalten und eine betriebssichere und einfach zu bedienende und eine Mehrfachfunktion erfüllende Handbremse zu erstellen. Die mechanische und die elektrische Bremsung sollen möglichst unabhängig voneinander eingeleitet werden.

Diese Ziele werden erfindungsgemäß mit einer Handbremse gemäß den Merkmalen des Kennzeichens des Anspruches 1 erreicht.

Erfindungsgemäß wird es möglich, bei Betätigung des Handgriffes eine elektrische Bremsung und allenfalls auch die vorgeschriebene und vorgesehene mechanische Bremsung vorzunehmen. Das am Ausgang der Positionsgebereinheit anliegende Signal kann derart ausgewertet werden, dass sein erstes Auftreten für eine Umschaltung des Motors von seiner Funktion als Antriebsmotor in seine Funktion als Generator sorgt und Änderungen des Signals können das Ausmaß der Rückspeisung des Stroms bzw. der Bremswirkung des im Generatorbetrieb arbeitenden Motors regeln. Eine derartig doppelwirkende Handbremse ist im Betrieb in derselben Weise zu bedienen wie eine herkömmliche Handbremse mit einem Handgriff, der lediglich die hydraulische Bremse betätigt. Sofern der Fahrer die erfindungsgemäße Handbremse betätigt, merkt der Fahrer keinen Unterschied. Zu Beginn des Verschwenkens des Handgriffes wird über die Positionsgebereinheit eine Umschaltung des Antriebsmotors bewirkt und die dabei entstehende Bremswirkung gleicht der Bremswirkung einer leicht betätigten mechanischen Bremse.

Mit der vorgesehenen Positionsgebereinheit kann unmittelbar nach Verlassen der Grundstellung bzw. der Ausgangsstellung des Handgriffes eine Umschaltung des Motorbetriebes vom Antriebsbetrieb in den Generatorbetrieb erreicht werden. Abhängig von der bzw. einer weiteren Verschwenkung des Handgriffs kann die Rückspeisung von elektrischem Strom in den Akkumulator des Fahrzeuges dosiert werden, womit auch die Bremswirkung dosiert, insbesondere ansteigend dosiert, werden kann, noch bevor bei weiterem Verschwenken und durch Beaufschlagung der hydraulischen Bremsregeleinheit die mechanische Bremsung des Fahrzeuges eingeleitet wird. Einrichtungen zum Umschalten des Antriebsmotors bzw. zur Steuerung der Rückspeisung des Stroms sind dem Fachmann bekannt.

Es kann vorgesehen sein, dass während bzw. bis zum Ende der mechanischen Bremsung die Stromsrückspeisung in den Akkumulator weiterhin, insbesondere mit maximalem Wert, aufrecht erhalten bleibt, sodass, so lange der Antriebsmotor von den Rädern angetrieben wird, dieser als Generator wirken kann und Energie rückgewonnen wird.

Eine vorteilhafte Ausbildung des Handgriffes wird mit den Merkmalen des Anspruches 5 und/oder 6 erreicht. Damit kann die mechanische Abbremsung des Fahrzeuges durch die hydraulische Bremse eingestellt und dosiert werden. Sobald der Einstellfortsatz auf die hydraulische Bremsregeleinheit trifft bzw. auf diese drückt, wirkt diese auf die Bremseinheit des Rades und abhängig von dem mit dem Einstellfortsatz ausgeübten Druck wird dieses mehr oder weniger stark gebremst.

Die Einleitung der mechanischen Bremsung erfolgt über eine Druckbeaufschlagung der Bremsregeleinheit. Die elektrische Bremsung erfolgt über eine Weg- bzw. Positionsmessung und Weitergabe der Messsignale an eine Motorsteuereinheit.

Vorteilhaft ist es, wenn die Merkmale des Anspruches 8 verwirklicht sind. In der Grundstellung ist die hydraulische Bremse nicht aktiviert und der Motor wird je nach Stellung des Fahrthebels angetrieben oder läuft im Leerlauf. Bei einer Verschwenkung des Handgriffes, deren Ausmaß eingestellt bzw. festgelegt sein kann, erfolgt die Umschaltung des Motors, indem die Positionsgebereinheit die Motorsteuerung mit einem Signal beaufschlagt, das bewirkt, dass der Elektromotor auf Rückspeisung umgestellt wird. Nach Zurücklegen eines vorgegebenen Totganges, bei dessen Durchlaufen die Positionsgebereinheit bei zunehmender Verschwenkung des Handgriffes ein sich erhöhendes Signal abgibt, kann die Bremskraft des nunmehr als Generator wirkenden Motors erhöht werden, um die Bremswirkung sukzessive zu verstärken. Nach Überwindung des Totganges beaufschlagt der Stellfortsatz des Handgriffs die hydraulische Bremsregeleinheit und die mechanische Bremsung des Fahrzeuges beginnt. Dazu ist es vorteilhaft, wenn die Merkmale der Ansprüche 9 und 10 erfüllt sind.

Die Positionsgebereinheit kann mit bekannten robusten, leicht am Basisteil und am Handgriff montierbaren, kleinen Bauteilen erstellt werden. Insbesondere kommen Hallsensoren oder Potentiometer zum Einsatz, deren miteinander zusammenwirkende Sensorteile in dem Bereich angeordnet sind, in dem der Handgriff am Basisteil verschwenkbar gelagert ist bzw. eine Relativbewegung zwischen Handgriff und Basisteil gut detektierbar ist; dieser Bereich ist insbesondere der drehpunktnahe Bereich.

Die vorgesehene elektrische Bremsregeleinheit steuert die Funktion des elektrischen Antriebsmotors, abhängig vom Ausgangssignal der Positionsgebereinheit.

Die Erfindung betrifft auch zweirädrige Fahrzeuge mit Elektromotoren und einer erfindungsgemäßen Handbremse. Insbesondere handelt es sich dabei um zweirädrige Fahrzeuge, bei denen die Handbremse bzw. deren Basisteil gegebenenfalls mit einer Befestigungseinheit am Lenker befestigt ist. Erfindungsgemäß sind derartige Fahrzeuge mit den Merkmalen der Ansprüche 13 und/oder 14 charakterisiert.

Derartige zweirädrige Fahrzeuge besitzen üblicherweise jeweils eine auf das Vorderrad und jeweils eine auf das Hinterrad wirkende hydraulisch betätigte Bremse. Es kann vorgesehen sein, dass bei Betätigung der Handbremse für das Vorderrad und/oder bei Betätigung der Handbremse für das Hinterrad eine Umschaltung eines vorgesehenen einzigen Antriebsmotors erfolgt. Sofern das Vorderrad und das Hinterrad einen jeweils unabhängig von dem anderen angetriebenen elektrischen Antriebsmotor besitzen, kann die jeweils vorgesehene Handbremse auf den ihr zugeordneten Motor einwirken und diesen umschalten.

Es kann vorgesehen sein, dass am Lenker oder an der Handbremse, insbesondere am Basisteil, eine Anzeige, beispielsweise eine LED, angebracht ist, welche von der Motorsteuerung angesteuert ist und signalisiert, dass der Motor von seiner Antriebsfunktion in die Generatorfunktion umgeschaltet ist.

Die elektrische Bremswirkung kann auch dann noch bis zu ihrem Maximum erhöht werden, wenn die mechanische Bremswirkung bereits durch eine entsprechende weite Verschwenkung des Handgriffes eingesetzt hat bzw. die mechanische Bremsung bewirkt hat, dass sich die Antriebsräder nur mehr langsam drehen. Auch nach einem Blockieren der Räder durch mechanische Bremsung kann bzw. wird die Generatorwirkung des Motors beibehalten werden, da der Handgriff in eine Position verschwenkt ist, in der die Wirkung des Motors auf Generatorbetrieb umgeschaltet ist. Erst wenn der Handgriff in seine Grundstellung zurückverschwenkt ist, beendet die Positionsgebereinheit ihr Steuersignal und die Motorsteuereinheit schaltet den Motor um, sodass dieser wieder als Antriebsmotor wirkt. In dieser Stellung steht wieder die Antriebskraft des Motors, gesteuert durch Verstellung eines Fahrthebels oder Drehgriffs zur Verfügung. Vorteilhafterweise wird die Stromversorgung des Motors sofort bei einem Verschwenken des Handgriffs bzw. bei Beginn des Verschwenkens aus seiner Grundposition heraus unterbrochen, sodass ein gleichzeitiges Bremsen und "Gasgeben" nicht möglich ist. Eine entsprechende Unterbrechung der Stromzufuhr zum Motor M erfolgt in der Motoreinheit 10. Das Steuersignal der Positionsgebereinheit blockiert somit vorteilhafterweise die Wirkung des Fahrthebels bzw. eines zur Regelung der Fahrgeschwindigkeit vorgesehenen Drehgriffs.

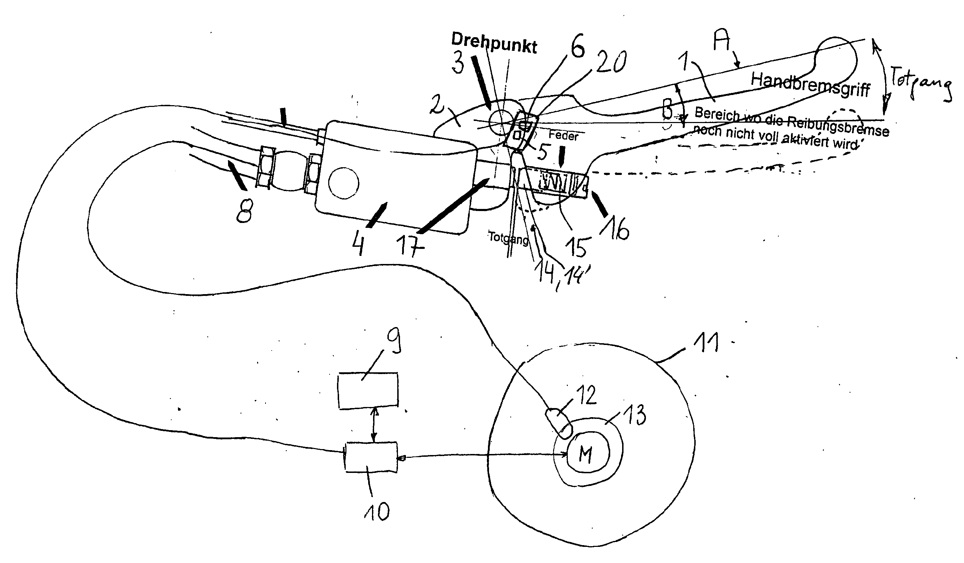

Anhand der Zeichnung wird die Erfindung beispielsweise näher erläutert. In der Fig. ist schematisch eine Handbremse dargestellt, die auf ein Rad 11 eines Fahrzeuges einwirkt. Der elektrische Antriebsmotor M ist schematisch als Nabenmotor dargestellt. Es ist ohne weiters möglich, einen entsprechenden Motor M vorzusehen, der über einen Kettenantrieb oder ein Getriebe das Rad 11 antreibt. Das Rad 11 besitzt eine Scheibenbremse 13 mit Bremseinheit 12, die über eine hydraulische Bremsleitung 8 mit einer hydraulischen Bremsregeleinheit 4 verbunden ist. Prinzipiell ist es auch möglich, andere hydraulische Bremseinheiten vorzusehen, die in unterschiedlicher Weise auf das Rad 11 einwirken bzw. dieses abbremsen können. Die hydraulische Bremsregeleinheit 4 besitzt eine Stelleinheit 17, die von einer Betätigungseinheit 14 betätigbar ist, die auf einem Handgriff 1 der Handbremse vorgesehen ist. Die Handbremse an sich wird auf einem nicht dargestellten Lenker mit einer nicht dargestellten Befestigungseinheit festgelegt. Eine derartige Befestigungseinheit kann an einem Basisteil 2 der Handbremse angreifen bzw. mit diesem Basisteil verbunden sein. Am Basisteil 2 ist in einem Drehpunkt 3 der Handgriff 1 verschwenkbar gelagert, der aus einer Grundstellung bzw. Ruhestellung A um den Drehpunkt 3 verschwenkt werden kann. Um eine mechanische Bremsung einzuleiten, kommt nach Überwindung eines vorgegebenen Schwenkwinkels bzw. Verschwenkweges bzw. Durchlaufen eines Totganges zwischen der Stelleinheit 17 und der Betätigungseinheit 14 die Betätigungseinheit 14 in Anlage an die Stelleinheit 17 und die mechanische Abbremsung des Rades 11 beginnt. Die Größe der mechanischen Bremswirkung hängt sodann vom Verschwenkungswinkel B des Handgriffes 1 ab; diese Funktionsweise ist bei hydraulischen Handbremsen üblich.

Erfindungsgemäß ist nunmehr vorgesehen, dass im drehpunktnahen Bereich des Handgriffs 1 und des Basisteils 2 die miteinander zusammenwirkenden, signalgenerierenden Sensorteile 5, 6 einer Positionsgebereinheit 20 angeordnet sind, welche die Position und die Verschwenkung des Handgriffs 1 gegenüber dem Basisteil 2 detektiert und an ihrem Ausgang ein von der gegenseitigen Stellung von Handgriff 1 und Basisteil 2 abhängiges Steuersignal abgibt. Die Positionsgebereinheit 20 gibt abhängig von der Stellung bzw. vom Ausmaß der Verschwenkung des Handgriffes 1 ein Steuersignal veränderlicher Höhe ab, wobei insbesondere die Höhe des Steuersignals mit zunehmender Verschwenkung des Handgriffes 1 aus der Grundstellung A zunimmt und gegebenenfalls nach Erreichen eines maximalen Steuersignalwertes, insbesondere in einer Stellung des Handgriffs 1 bevor dessen Betätigungseinheit 14 in Kontakt mit der Stelleinheit 17 gelangt, unverändert bleibt.

Mit einer an die Positionsgebereinheit 20 angeschlossenen Motorsteuereinheit 10 wird abhängig vom Eintreffen und der Höhe des Steuersignals der Positionsgebereinheit 20 der Motor M zwischen seiner Funktion als Antriebsmotor und seiner Funktion als Generator umgeschaltet und die Bremswirkung des Motors bzw. die Rückspeisung von Strom eingeregelt. Bei einer größeren Verschwenkung des Handgriffes 1 nimmt das Steuersignal der Positionsgebereinheit zu und die Bremswirkung des Motors M wird erhöht. Die Motorsteuereinheit 10 bewirkt, dass die Verbindung zwischen dem am Fahrzeug vorgesehenen Akkumulator 9 und dem Motor M in der Weise vorgegeben bzw. umgeschaltet wird, dass durch Beaufschlagung des Motors M mit Strom entweder dieser als Antriebsmotor fungiert oder durch Umschaltung des Motors M der Motor aufgrund seiner zwangsweise erfolgenden Drehung als Generator wirkt und den Akkumulator 9 lädt.

Zur Einstellung der Größe des Totganges bzw. des Verschwenkweges B über den noch keine mechanische Bremsung des Rades 11 erfolgt, kann der Stellfortsatz 14 auf dem Handgriff 1 verstellbar gelagert sein. In Frage kommt beispielsweise eine in einem Gewinde verstellbar gelagerte Einstellschraube 16, die gegebenenfalls direkt die Stelleinheit 17 belasten kann.

Möglich ist auch ein mit einer Feder 15 belastbarer Bolzen 14', wobei die Federkraft mittels einer Einstellschraube 16 eingeregelt werden kann. In diesem Fall besteht der Totgang in der Kompressibilität der Feder derart, dass die Stelleinheit 17 erst dann die Bremswirkung auslöst, wenn der Druck des Einstellfortsatzes bzw. der Feder 15 so groß geworden ist, dass ein gewisser unterer Schwellenwert überschritten ist. Alternativ kann die Kraft der Feder 15 klein gewählt werden und eine Bestätigung der Stelleinheit 17 durch den Bolzen 14' erfolgt erst dann, wenn die Feder 15 völlig komprimiert ist. Vorteilhafterweise liegt, insbesondere in diesen Fällen der Stellfortsatz in einem gewissen Abstand von der Stelleinheit 17 womit ein gewisser Totgang vorgegeben ist. Bei einer Verstellung gegen den Druck bzw. Überwindung des Druckes der Feder 15 für eine Auslösung der Bremswirkung kann der Bolzen 14' auch am Stellteil 17 anliegen, da der Totgang durch den Kompressionsweg der Feder 15 gegeben ist. Damit ist immer sichergestellt, dass ein gewisser Totgang B des Handgriffes 1 vorhanden ist, über den ausschließlich eine elektrische Abbremsung des Fahrzeuges erfolgt.

## Patentansprüche

1. Handbremse umfassend einen Basisteil (2) und einen in einem Drehpunkt (3) auf dem Basisteil (2) verschwenkbar gelagerten Handgriff (1), von weichem Handgriff (1) eine Betätigungseinheit (14) für eine hydraulische Bremsregeleinheit (4) getragen ist,
**dadurch gekennzeichnet, dass**
- am Handgriff (1) und am Basisteil (2), insbesondere im drehpunktnahen Bereich des Handgriffs (1) und des Basisteils (2), die miteinander zusammenwirkenden, signalgenerierenden Sensorteile (5, 6) einer Positionsgebereinheit (20) angeordnet sind, welche die Position und/oder die Verschwenkung des Handgriffs (1) gegenüber dem Basisteil (2) detektiert und an ihrem Ausgang ein, insbesondre bezüglich seiner Höhe, von der gegenseitigen Stellung von Handgriff (1) und Basisteil (2) abhängiges Steuersignal abgibt.

2. Handbremse nach Anspruch 1, **dadurch gekennzeichnet, dass** ein Sensorteil (5) auf dem Basisteil (2) und der andere Sensorteil (6) am Handgriff (1) angeordnet ist.

3. Handbremse nach Anspruch 1 oder 2, **dadurch gekennzeichnet, dass** das elektrische Steuersignal zur Ansteuerung eines Antriebsmotors (M) eingesetzt ist.

4. Handbremse nach einem der Ansprüche 1 bis 3, **dadurch gekennzeichnet, dass** die Betätigung der hydraulischen .Bremsregeleinheit (4) und des Antriebsmotors (M) bei einer Verstellbewegung des Handgriffs (1) unbeeinflusst voneinander erfolgt.

5. Handbremse nach einem der Ansprüche 1 bis 4, **dadurch gekennzeichnet, dass** die Betätigungseinheit (14) einen Stellfortsatz umfasst ist, der auf dem Handgriff (1) verstellbar gelagert ist, und mit dem bei Verschwenkung des Handgriffs (1) gegenüber dem Basisteil (2) die Stelleinheit (17) der hydraulischen Bremsregeleinheit (4) druckbeaufschlagbar und/oder in Bremsstellung verstellbar ist.

6. Handbremse nach einem der Ansprüche 1 bis 5, **dadurch gekennzeichnet, dass** der Stellfortsatz (10) als Stellschraube ausgebildet ist, welche in eine, vorzugsweise mit Innengewinde ausgebildete Ausnehmung des Handgriffs (1) verstellbar eingeschraubt ist oder dass der Stellfortsatz (14) in Form eines in einer Ausnehmung des Handgriffs (1) verschiebbar gelagerten Bolzens ausgebildet ist, der von einer Druckfeder (15) beaufschlagt ist, deren Federkraft gegebenenfalls mit einer Stellschraube (16) verstellbar ist und bei Anlage des Bolzens an die Stelleinheit (17) und Weiterverschwenkung des Handgriffes (1) zur Gänze zusammendrückbar ist.

7. Handbremse nach einem der Ansprüche 1 bis 6, **dadurch gekennzeichnet, dass** die von der Handbremse umfasste hydraulische Bremsregeleinheit (4) am Basisteil (2) befestigt oder mit diesem verbunden ist.

8. Handbremse nach einem der Ansprüche 1 bis 7, **dadurch gekennzeichnet, dass** der Handgriff (1) am Basisteil (2) eine Grundstellung (A) besitzt und zwischen der Grundstellung (A) und einer ersten Verschwenkposition, in der der Stellfortsatz (14) mit der Stelleinheit (17) der hydraulischen Bremsregeleinheit (4) in Kontakt gelangt und in dieser Position beginnt, die Bremseinrichtung (12) zu betätigen, ein Totgang bzw. freier Schwenkweg (B) für den Handgriff (1) ausgebildet ist, über dem bzw. während dessen Zurücklegung das Rad (11) durch Generatorbetrieb des Motors (M) abbremsbar ist.

9. Handbremse nach einem der Ansprüche 1 bis 8, **dadurch gekennzeichnet, dass** die Positionsgebereinheit (20) abhängig von der Stellung bzw. vom Ausmaß der Verschwenkung des Handgriffes (1) aus der Grundstellung (A) ein Steuersignal veränderlicher Höhe abgibt, wobei insbesondere die Höhe bzw. Stärke des Steuersignals mit zunehmender Verschwenkung des Handgriffes (1) aus der Grundstellung (A) zunimmt und gegebenenfalls nach Erreichen eines maximalen Steuersignalwertes, insbesondere in einer Stellung des Handgriffs (1), in der die Betätigungseinheit (14) in Kontakt mit der hydraulischen Bremsregeleinheit (4) gelangt, unverändert bleibt.

10. Handbremse nach einem der Ansprüche 1 bis 9, **dadurch gekennzeichnet, dass** die Positionsgebereinheit (20) als Hallsensor oder als Potentiometer oder als kapazitiver oder induktiver Wegsensor ausgebildet ist.

11. Handbremse nach einem der Ansprüche 1 bis 10, **gekennzeichnet durch** eine an die Positionsgebereinheit (20) angeschlossene Motorsteuereinheit (10), mit der abhängig vom Eintreffen und der Höhe bzw. Stärke des Steuersignals der Positionsgebereinheit (20) ein vorgesehener und von der Positionsgebereinheit (20) angesteuerter Motor (M) zwischen seiner Funktion als Antriebsmotor und seiner Funktion als Generator umschaltbar und in dieser Funktion bezüglich des Ausmaßes seiner Bremswirkung ansteuerbar ist.

12. Handbremse nach einem der Ansprüche 1 bis 11, **dadurch gekennzeichnet, dass** der Basisteil (2) mit einer Befestigungseinheit zur Befestigung auf einem Lenker eines Zweiradfahrzeuges versehen ist.

13. Zweirädriges Fahrzeug, insbesondere Elektroroller, mit zumindest einem von einem an einen Akkumulator (9) angeschlossenen Elektromotor (M) angetriebenen Rad (11) und einer auf dieses Rad (11) einwirkenden Handbremse nach einem der Ansprüche 1 bis 12, **dadurch gekennzeichnet, dass** die Positionsgeber (4) an eine elektrische Motorsteuerung (10) des Elektromotors (M) angeschlossen ist und dass bei Beaufschlagung der Motorsteuerung (10) mit dem Steuerungssignal der Positionsgebereinheit (4) die Motorsteuerung (10) die Stromversorgung des Elektromotors (M) unterbricht und den Motor (M) auf Generatorbetrieb umschaltet, sodass dieser den am Fahrzeug vorgesehenen, im Fahrbetrieb den Motor (M) mit Strom versorgenden Akkumulator (9) lädt und das Rad (11) abbremst.

14. Fahrzeug nach Anspruch 13, **dadurch gekennzeichnet, dass** das Ausmaß der Einspeisung des vom Elektromotor (M) generierten Stromes in den Akkumulator (9) abhängig von der Höhe des Ausgangssignals der Positionsgebereinheit (20) veränderbar ist.
